# EUROPÄISCHE PATENTSCHRIFT

(11) **EP 1 993 877 B1**
(45) Veröffentlichungstag und Bekanntmachung des Hinweises auf die Patenterteilung: **01.09.2010**
(21) Anmeldenummer: 07723073.8
(22) Anmeldetag: 07.03.2007
(51) Int. Cl.: B60R 16/027, H01R 35/02

(54) **VERBINDUNGSVORRICHTUNG ZUR ÜBERTRAGUNG VON ELEKTRISCHEM STROM, INSBESONDERE FÜR EINE LENKRADHEIZUNG EINES FAHRZEUGS**
CONNECTION APPARATUS FOR TRANSMITTING ELECTRIC CURRENT, IN PARTICULAR FOR A STEERING WHEEL HEATER OF A VEHICLE
DISPOSITIF DE LIAISON POUR LA TRANSMISSION DE COURANT ELECTRIQUE, NOTAMMENT POUR UN CHAUFFAGE DE VOLANT DE DIRECTION D'UN VEHICULE

(30) Priorität: 14.03.2006 DE 102006013434
(43) Veröffentlichungstag der Anmeldung: 26.11.2008
(73) Patentinhaber: Valeo Schalter und Sensoren GmbH, 74321 Bietigheim-Bissingen (DE)
(72) Erfinder: SIMONIS, Karl, 75428 Illingen (DE); LIPFERT, Rainer, 74076 Heilbronn (DE); HASCH, Martin, 71701 Schwieberdingen (DE); GRUENER, Roland, 71732 Tamm (DE); BINDER, Bernd, 71679 Asperg (DE)
(74) Vertreter: Pothmann, Karsten
(86) Internationale Anmeldenummer: PCT/EP2007/001928
(87) Internationale Veröffentlichungsnummer: WO 2007/104450

(56) Entgegenhaltungen:
- DE-A1- 4 027 952
- DE-A1- 19 535 355
- GB-A- 2 282 014
- US-A- 5 770 818

## Beschreibung

Die Erfindung betrifft eine Verbindungsvorrichtung zur Übertragung von elektrischem Strom, insbesondere für eine Lenkradheizung eines Fahrzeugs, zwischen einem feststehenden Gehäuseteil und einem gegenüber dem Gehäuseteil drehbaren Rotor, umfassend ein Flachbandkabel und im Bereich der freien Enden des Flachbandkabels vorgesehene Endsteckverbinder.

Eine solche Lenkheizung gemäß den Merkmalen des Oberbegriffs von Anspruch 1 ist aus dem Dokument GB-A-2282014 bekannt.

Die Erfindung betrifft außerdem eine Lenkstock-Lenkrad-Übertragungseinheit mit einer derartigen Verbindungsvorrichtung.

Aus der DE 195 33 439 C1 ist eine Verbindungsvorrichtung.zur Übertragung von Strom und/oder Licht zwischen zwei Endstellen bekannt geworden. Eine derartige Verbindungsvorrichtung umfasst ein erstes feststehendes Gehäuseteil und ein relativ dazu, um eine begrenzte Anzahl von Umdrehungen verdrehbares zweites Gehäuseteil. Innerhalb des Gehäuses ist in Windungen verlaufend ein Flachbandkabel angeordnet, wobei die Endendes zumindest einen Flachbandkabels am ersten Gehäuseteil und die anderen Enden des Flachbandkabels am zweiten Gehäuseteil festgelegt sind. Derartige Verbindungsvorrichtungen sind zum Beispiel dafür vorgesehen, um in Kraftfahrzeugen Strom zwischen dem drehbeweglich angeordneten Lenkrad und einem feststehenden Gehäuseteil, insbesondere einem Lenkstockschaltermodul, zu übertragen. Über Leitungen der Verbindungsvorrichtung können beispielsweise ein Airbagsystem oder eine lenkradseitige Steuerung eines Audio- und Navigationssystems erfolgen.

Soll für eine Lenkradheizung Strom zwischen dem feststehenden Gehäuseteil und dem Rotor übertragen werden, so sind aufgrund der vergleichsweise hohen zu übertragenden Strommenge Leitungen mit entsprechend großen Querschnitten erforderlich. Da gängige Flachbandkabel derart hohe Strommengen nicht übertragen können, wurde versucht, zwei parallel laufende, den Strom übertragende Flachbandkabel vorzusehen, eines zur Stromzuführung und eines zur Stromabführung. Das Vorsehen mehrerer, den Strom für eine Lenkradheizung zu übertragenden, parallel laufenden Flachbandkabeln, ist vergleichsweise aufwändig und benötigt vergleichsweise viele Bauteile.

Der vorliegenden Erfindung liegt deshalb die Aufgabe zugrunde, eine Verbindungsvorrichtung der eingangs beschriebenen Art vorzuschlagen, mit der einerseits vergleichsweise hohe Strommengen übertragen werden können und die andererseits vergleichsweise kompakt baut und mit einer geringen Anzahl von Bauteilen auskommt.

Diese Aufgabe wird durch eine Verbindungsvorrichtung der eingangs genannten Art dadurch gelöst, dass das Flachbandkabel einen zwischen den Endsteckverbindern gelegenen, zur rotorseitigen beziehungsweise gehäuseseitigen Anordnung vorgesehenen Zentralsteckverbinder aufweist, von dem jeweils wenigstens eine Leitung zu dem einen Endsteckverbinder und zu dem anderen Endsteckverbinder verläuft, wobei die beiden Endsteckverbinder zur gehäuseseitigen beziehungsweise rotorseitigen Anordnung vorgesehen sind.

Hierdurch wird vorteilhafterweise erreicht, dass mit lediglich einem Flachbandkabel, das einen Zentralsteckverbinder und entsprechend mit dem Zentralsteckverbinder verbundene Endsteckverbinder aufweist, eine vergleichsweise hohe Stromstärke übertragen werden kann. Insgesamt können mit dem lediglich einen Flachbandkabel zwei unabhängig voneinander vorgesehene Leitungen zur Verfügung gestell werden, nämlich je eine Leitung vom Zentralsteckverbinder zu den beiden Endsteckverbindern.

Gemäß einer vorteilhaften Ausbildung der Erfindung kann vorgesehen sein, dass der Zentral.steckverbinder sich um ein Maß x in Längsrichtung des Flachbandkabels erstreckt und dass der Abstand a vom Zentralsteckverbinder zum einen Endsteckverbinder im Wesentlichen dem Abstand b vom Zentralsteckverbinder zum anderen Endsteckverbinder zuzüglich dem Maß x entspricht. Daraus ergibt sich, dass: a = b + x. Eine derartige Ausgestaltung hat den Vorteil, dass die beiden Flachbandkabelabschnitte zwischen dem Zentralsteckverbinder und den jeweiligen Endsteckverbindern in einer Montageposition weitgehend parallel zueinander verlaufend angeordnet werden können. Der Zentralsteckverbinder verläuft dann im Wesentlichen in Richtung des kürzeren Flachbandkabelabschnitts. Die einzelnen Steckverbinder sind dabei vorteilhafterweise im Wesentlichen in Längsrichtung des Flachbandkabels verlaufend ausgebildet. Im eingebauten Zustand kann das Flachbandkabel dann auf der dem längeren Flachbandkabelabschnitt zugewandten Seite des Zentralsteckverbinders in dem unmittelbar an den Zentralsteckverbinder angrenzenden Bereich um 180° umgebogen werden.

Bei einer derartigen Ausgestaltung kann vorteilhafterweise vorgesehen sein, dass die beiden Endsteckverbinder, beziehungsweise die dann einander zugewandten Seiten der beiden Endsteckverbinder aneinander befestigbar sind. Insbesondere ist denkbar, dass die beiden Endsteckverbinder miteinander lösbar oder unlösbar verrastbar sind.

Vorteilhafterweise kann der Zentralsteckverbinder zwei Kontaktstellen.vorsehen, wobei jede der Kontaktstellen mit wenigstens einer sich in Längsrichtung des Flachbandkabels erstreckenden Leitung elektrisch verbunden ist und wobei an beiden Endsteckverbindern für jede Leitung wenigstens eine eigene Kontaktstelle vorgesehen ist. Das Vorsehen von dann insbesondere zwei parallel zueinander, sich in Längsrichtung über die gesamte Länge des Flachbandkabels erstreckenden Leitungen hat den Vorteil, dass eine ausreichende Strommenge zwischen dem Zentralsteckverbinder und den Endsteckverbindern transportiert werden kann. Zudem kann eine geeignete und vorteilhafte Laminierung der Leitungen im Flachbandkabel erfolgen. Werden zwei Leitungen vorgesehen, die im mittleren Bereich voneinander beabstandet angeordnet sind, so können in diesem mittleren Bereich die Ober- und Unterseite der Isolierung des Flachbandkabels aneinander befestigt werden.

Gemäß einer weiteren Ausgestaltung der Erfindung ist denkbar, dass die zentralsteckverbinderseitigen Kontaktstellen als sich in quer zur Längsrichtung des Flachbandkabels erstreckende Steckerlitzen ausgebildet sind. Derartige Steckerlitzen ragen insbesondere in der gleichen Richtung über die Außenkante des Flachbandkabels hervor, so dass sie quer zur Längsrichtung des Flachbandkabels kontaktierbar sind. Diese Steckerlitzen sind vorteilhafterweise roto.rseitig angeordnet, so dass sie parallel zur Drehachse des Rotors mittels einem lenkradseitigen Gegensteckerelement kontaktierbar sind.

Gemäß einer weiteren vorteilhaften Ausgestaltung der Erfindung ist vorgesehen, dass die endsteckverbinderseitigen Kontaktstellen als sich in Längsrichtung des Flachbandkabels erstreckende Steckerlitzen ausgebildet sind. Diese Steckerlitzen können vorteilhafterweise in Richtung des Flachbandkabels mit feststehenden, gehäuseteilseitigen Gegenkontakten .kontaktiert werden. Als Gegenkontakte sind insbesondere Gegenstecker am Gehäuseteil zur Aufnahme der Steckerlitzen vorgesehen.

Die eingangs genannte Aufgabe wird auch durch eine Lenkstock-Lenkrad-Übertragungseinheit mit einem feststehenden lenkstockseitigen Gehäuseteil und einem gegenüber dem Gehäuseteil drehbaren, lenkradseitigen Rotor gelöst, die eine erfindungsgemäße Verbindungsvorrichtung umfasst.

Bei einer derartigen Übertragungseinheit kann insbesondere vorgesehen sein, dass der Rotor eine taschenartige Aufnahme für den Zentralsteckverbinder aufweist. Hierdurch kann eine positionsgenaue und dauerhaft sichere Anordnung des Zentralsteckverbinders am Rotor gewährleistet werden.

Die taschenartige Aufnahme ist dabei vorteilhafterweise lediglich geringfügig größer als der Zentralsteckverbinder. Insbesondere ist denkbar, dass der Zentralsteckverbinder in der Aufnahme über entsprechende Rastmittel insbesondere lösbar verrastet sein kann.

Die Aufnahme kann dabei im Wesentlichen tangential zur Rotorachse im Rotor angeordnet sein. Hierdurch wird insbesondere ein tangentialer Abgang der sich an den Zentralsteckverbinder anschließenden Flachbandkabelabschnitt gewährleistet werden.

Dabei ist denkbar, dass die Aufnahme in axialer Richtung bezüglich der Rotorachse auf wenigstens einer Seite zum Einführen des Zentralsteckverbinders offen ist. Vorteilhafterweise ist bei einer derartigen Ausführungsform die der offenen Seite abgewandte, in axialer Richtung vorgesehene Seite geschlossen. Ebenso können die in radialer Richtung vorgesehenen Seiten der Aufnahme verschlossen sein.

Zum Herausführen der beiden zwischen dem Zentralsteckverbinder und den beiden Endsteckwerbindern verlaufenden Flachbandabschnitte aus der Aufnahme ist vorteilhafterweise vorgesehen, dass die Aufnahme in tangentialer Richtung bezüglich der Rotorachse auf lediglich einer Seite offen ist. Wie bereits ausgeführt, verlaufen vorteilhafterweise im eingebauten Zustand der Verbindungsvorrichtung beide Flachbandkabelabschnitte in die gleiche Richtung.

Ferner ist erfindungsgemäß denkbar, dass der Rotor ein Rotorgrundteil und ein Rotorabdeckteil umfasst, wobei die Aufnahme im Rotorgrundteil angeordnet ist. Bei eingesetztem Zentralsteckverbinder in das Rotorgrundteil kann dieses vorteilhafterweise mit dem Rotorabdeckteil abgedeckt werden. Am Rotorabdeckteil können insbesondere steckerhülsenartige Überstände angeformt sein, die die zentralsteckverbinderseitigen Steckerlitzen aufnehmen oder beispielsweise schützend umgeben.

Weitere Einzelheiten und vorteilhafte Ausgestaltungen der Erfindung sind der folgenden Beschreibung zu entnehmen, anhand derer das in den Figuren dargestellte Ausführungsbeispiel der Erfindung näher beschrieben und erläutert wird.

Es zeigen:
- Figur 1: eine erfindungsgemäße Lenkstock-Lenkrad- Übertragungseinheit mit einem lenkstockseitigen Gehäuseteil und mit einem Rotor,
- Figur 2: eine erfindungsgemäße Verbindungsvorrichtung in ausgestrecktem Zustand;
- Figur 2a: die Leitungen der Steckverbinder der Verbindungsvorrichtung gemäß Figur 2;
- Figur 3: die Verbindungsvorrichtung gemäß Figur 2, bei der die einzelnen Flachbandkabelabschnitte parallel zueinander verlaufen; und
- Figur 4: eine Einzelteildarstellung des Rotorgrundteils des Rotors gemäß Figur 1.

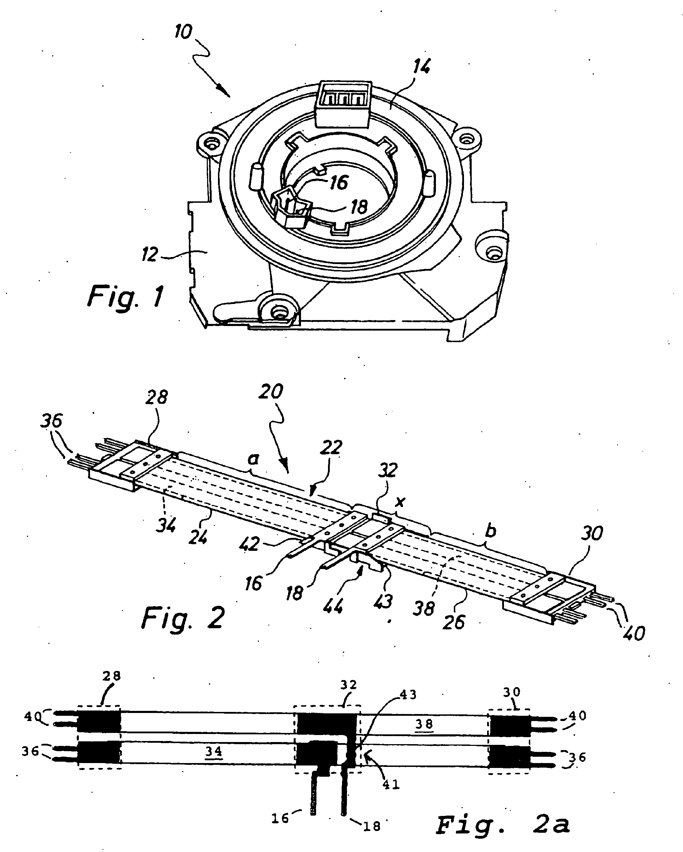

In der Figur 1 ist ein eine erfindungsgemäße Lenkstock-Lenkrad-Übertragungseinheit 10 dargestellt, die ein feststehendes, lenkstockseitiges Gehäuseteil 12 und ein gegenüber dem Gehäuseteil 12 drehbar angeordneten Rotor 14 umfasst. Am Rotor 14 sind zwei Kontaktstellen 16, 18 in Form von parallel zur Mittellängsachse des Rotors ausgerichteten Steckerlitzen angeordnet. Diese Kontaktstellen 16, 18 dienen zum Anschluss an rotorseitige Leitungen, welche eine elektrische Lenkradheizung versorgen. Die Lenkradheizung als solche kann dabei aus elektrischen Widerständen gebildet sein, die bei Bestromung Wärme erzeugen.

In der Figur 2 ist eine erfindungsgemäße Verbindungsvorrichtung zur Übertragung von Strom für die Lenkradheizung zwischen dem Gehäuseteil 12 und dem Rotor 14 dargestellt..Die Vorrichtung 20 umfasst ein Flachbandkabel 22, das zwei Kabelabschnitte 24 und 26 umfasst. An den freien Enden des Flachbandkabels 22 sind je ein Endsteckverbinder 28, 30 angeordnet. Zwischen den Endsteckverbindern 28, 30, beziehungsweise zwischen den Kabelabschnitten 24, 26 ist ein Zentralsteckverbinder 32 angeordnet. Der Zentralsteckverbinder 32 umfasst die in der Figur 1 gezeigten Kontaktstellen 16, 18.

Wie insbesondere aus Figur 2a deutlich wird, weist das Flachbandkabel 2 parallel verlaufende Leitungen 34 und 38 auf, die sich jeweils über die gesamte Länge des Flachbandkabels von dem einen Endsteckverbinder 28 zum anderen Endsteckverbinder 30 erstrecken. Die Leitung 34 mündet in beiden Endsteckverbindern 28, 30 jeweils in Kontaktstellen 36; die Leitung 38 mündet an den beiden Endsteckverbindern 28, 30 in je zwei Kontaktstellen 40. Zentralsteckverbinderseitig ist die Leitung 34 mit der Kontaktstelle 16 elektrisch verbunden und die Leitung 38 mit der Kontaktstelle 18. Im Bereich 41 ist der zentralsteckverbinderseitige, zur Kontaktstelle 18 führende Leitungsabschnitt 43 gegenüber der Leitung 34 elektrisch isoliert ausgebildet.

Im Betrieb der Lenkradheizung kann beispielsweise der Strom kommend von den endsteckverbinderseitigen Kontaktstellen 40 zu der zentralsteckverbinderseitigen Kontaktstelle 18 geleitet werden. Die Kontaktstelle 18 dient dann als Zuleitung für die lenkradseitige Lenkradheizung. Der die Lenkradheizung durchfließende elektrische Strom wird dann über die zentralsteckverbinderseitige Kontaktstelle 16 hin zu den endsteckverbinderseitigen Kontaktstellen 36 geführt.

Zur Versorgung von Lenkradheizungen mit elektrischem Strom sind vergleichsweise hohe Stromflüsse erforderlich. Dazu ist es erforderlich, die Zu- und Ableitung entsprechend zu dimensionieren. Deshalb führen gemäß Figur 2 und Figur 2a von den vier Kontaktstellen 40 die beiden zwischen den Endsteckverbindern 28, 30 und dem Zentralsteckverbinder 32 liegenden Teilabschnitte der Leitung 38 zur zentralsteckverbinderseitigen Kontaktstelle 18. Für den Stromabfluss sind entsprechend eine Kontaktstelle 16, zwei Teilabschnitte der Leitung 34 und vier Kontaktstellen 36 vorgesehen.

Die Kontaktstellen 36, 40 können mit den jeweils zugehörigen Leitungen 34, 38 verschweißt oder verlötet sein. Entsprechend können die Kontaktstellen 16, 18 mit den jeweils zugehörigen Leitungen 34, 38 ebenfalls verlötet oder verschweißt sein.

Das Vorsehen von zwei parallel verlaufenden Leitungen 34, 38 hat den Vorteil, dass diese vom Isoliermaterial der Flachbandkabelabschnitte 24, 26 auch im Bereich zwischen den parallel verlaufenden Leitungen 34, 38 laminiert sein können. Hierdurch ergibt sich eine vorteilhafte Anordnung der Leitungen 34, 38 innerhalb der jeweiligen Isolierung der Flachbandkabelabschnitte 24, 26.

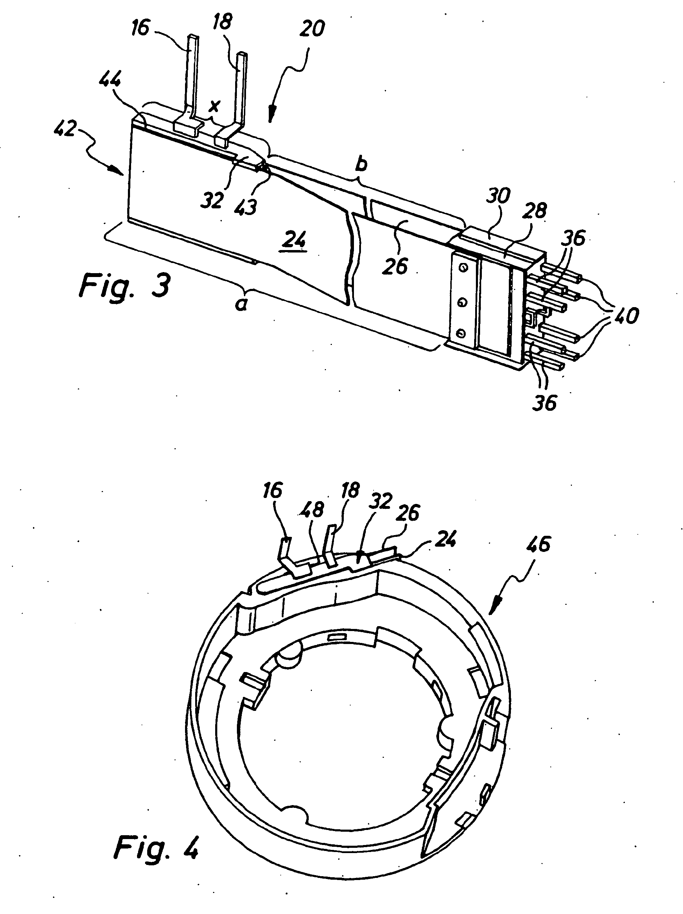

Wie aus den Figuren und 2 und 3 deutlich wird, erstreckt sich der Zentralsteckverbinder 32 in Längsrichtung um ein Maß x. Beim Abstand vom Zentralsteckverbinder zum Endsteckverbinder 30 beträgt das Maß b und der Abstand vom Zentralsteckverbinder 32 zum Endsteckverbinder 28 das Maß a. Dabei gilt im Wesentlichen: a = b + x. Hierdurch kann eine vorteilhafte, in Figur 3 dargestellte Anordnung der Verbindungsvorrichtung 20 erreicht werden. Der längere Kabelabschnitt 24 kann direkt an der ihm zugewandten Schmalseite 42 des Zentralsteckverbinders 32 senkrecht zu seiner Längserstreckung um 180° umgebogen werden und entlang der ihm dann zugewandten Oberseite 44 des Zentralsteckverbinders 32 verlaufen. Dazu kann der Zentralsteckverbinder auf seiner dem Kabelabschnitt 24 zugewandten Seite 42 eine im Längsschnitt wenigstens abschnittsweise rund oder gebogen ausgebildete, quer zur Längsrichtung des Flachbandkabels verlaufende Kante aufweisen, um welche der Kabelabschnitt 24 um 180° umgebogen wird. Durch Vorsehen einer entsprechenden Rundung an der Kante, an der der Kabelabschnitt 24 zum Anliegen kommt, können Beschädigungen am Flachbandkabel beim Umbiegen des Kabelabschnitts 24 unterbunden werden. Durch das beschriebene Umbiegen ergibt sich ein weitgehend gleicher Abstand b der beiden Endsteckverbinder 28, 30 zur Schmalseite 43 des Zentralsteckverbinders 32, wie aus Figur 3 deutlich wird.

Die beiden in Figur 3 einander zugewandten Flachseiten der beiden Endsteckverbinder 28, 30 können so ausgebildet sein, dass sie aneinander befestigbar, und insbesondere miteinander verrastbar sind. Hierdurch ergibt sich dann letzen Endes lediglich eine Endsteckverbindereinheit, bestehend aus den beiden Endsteckverbindern 28, 30, die mit Gegensteckerelementen im Gehäuseteil 12 elektrisch verbunden werden kann.

Der in der Figur 1 dargestellte Rotor 14 umfasst ein in Figur 1 zu sehendes Rotorabdeckteil sowie ein vom Rotorabdeckteil abgedecktes und in Figur 4 in Einzelteildarstellung gezeigtes Rotorgrundteil 46. Das Rotorgrundteil 46 weist eine taschenartige Aufnahme 48 für den Zentralsteckverbinder 32 auf. Die Aufnahme 48 umschließt dabei den Zentralsteckverbinder 32 an seinen einander gegenüberliegenden Flachseiten und an der den Kontaktstellen 16, 18 abgewandten Unterseite. Die Aufnahme 48 ist bezüglich der Rotorachse in axialer Richtung nach oben hin offen, so dass der Zentralsteckverbinder mit an ihm umgebogenen Kabelabschnitt 34, wie in Figur 3 dargestellt, in die Aufnahme 48 von axial oben her eingeschoben werden kann. Die Aufnahme 48 ist dabei in zur Rotorachse tangentialer Richtung auf einer Seite zum Durchführen der beiden Kabelabschnitte 24, 28 offen.

Beim Verdrehen des Rotors 14, beziehungsweise des Rotorgrundteils 46 gegenüber dem Grundgehäuse wird folglich eine sichere und dauerhafte Anordnung des Zentralsteckverbinders am Rotor gewährleistet. Der Zentralsteckverbinder 32 kann dabei zudem Befestigungsmittel, beispielsweise in Form von Rastverbindungen, aufweisen, mit denen er am Rotor, beziehungsweise am Rotorgrundteil 46, festsetzbar ist.

Die beiden Kabelabschnitte 24, 26 sind in der Figur 2 und der Figur 3 verkürzt dargestellt. Die beiden parallel zueinander verlaufenden Kabelabschnitte 24, 26 können im eingebauten Zustand entweder spiralartig um die Rotorachse verlaufen oder mit ein oder mehreren Windungen zwischen dem Rotor 14 und dem Gehäuseteil 12 angeordnet sein. Die Anordnung muss derart sein, dass der Rotor in beide Drehrichtungen um eine begrenzte Anzahl gegenüber dem Gehäuseteil 12 verdrehbar angeordnet ist.

Die endsteckverbinderseitigen Kontaktstellen 36 und 40 werden in gehäuseseitige, in den Figuren nicht dargestellte Gegensteckeraufnahmen zu deren Kontaktierung eingesteckt.

## Patentansprüche

1. Verbindungsvorrichtung (20) zur Übertragung von elektrischem Strom für eine Lenkradheizung eines Fahrzeugs, zwischen einem feststehenden Gehäuseteil (12) und einem gegenüber dem Gehäuseteil (12) drehbaren Rotor (14), umfassend ein Flachbandkabel (22) und im Bereich der freien Enden des Flachbandkabels (22) vorgesehene Endsteckverbinder (28, 30), **dadurch gekennzeichnet, dass** das Flachbandkabel (22) einen zwischen den Endsteckverbindern (28, 30) gelegenen, zur rotorseitigen beziehungsweise gehäuseseitigen Anordnung vorgesehenen Zentralsteckverbinder (32) aufweist, von dem jeweils wenigstens eine Leitung zu dem einen Endsteckverbinder (28) und zu dem anderen. Endsteckverbinder (30) verläuft, wobei die beiden Endsteckverbinder (28, 30) zur gehäuseseitigen beziehungsweise rotorseitigen Anordnung vorgesehen sind.

2. Verbindungsvorrichtung (20) nach Anspruch 1, **dadurch gekennzeichnet, dass** der Zentralsteckverbinder (32) sich um ein Maß x in Längsrichtung des Flachbandkabels (22) erstreckt und dass der Abstand a vom Zentralsteckverbinder (32) zum einen Endsteckverbinder (28) im Wesentlichen dem Abstand b vom Zentralsteckverbinder (32) zum anderen Endsteckverbinder (30) plus dem Maß x entspricht.

3. Verbindungsvorrichtung (20) nach Anspruch 1 oder 2, **dadurch gekennzeichnet, dass** die beiden Endsteckverbinder (28, 30) aneinander befestigbar, insbesondere miteinander verrastbar, sind.

4. Verbindungsvorrichtung (20) nach Anspruch 1, 2 oder 3, **dadurch gekennzeichnet, dass** am Zentralsteckverbinder (32) zwei Kontaktstellen (16, 18) vorgesehen sind, wobei jede der Kontaktstellen (16, 18) mit wenigstens einer sich in Längsrichtung des Flachbandkabels erstreckenden Leitung (34, 38) elektrisch verbunden ist und wobei an beiden Endsteckverbindern (28, 30) für jede Leitung (34, 38) wenigstens eine Kontaktstelle (36, 40) vorgesehen ist.

5. Verbindungsvorrichtung (20) nach Anspruch 4, **dadurch gekennzeichnet, dass** die zentralsteckverbinderseitigen Kontaktstellen (16, 18) als sich in quer zur Längsrichtung des Flachbandkabels (22) erstreckende Steckerlitzen ausgebildet sind.

6. Verbindungsvorrichtung (20) nach Anspruch 4 oder 5, **dadurch gekennzeichnet, dass** die endsteckverbinderseitigen Kontaktstellen (36, 40) als sich in Längsrichtung des Flachbandkabels erstreckende Steckerlitzen ausgebildet sind.

7. Lenkstock-Lenkrad-übertragungseinheit (10) mit einem feststehenden lenkstockseitigen Gehäuseteil (12) und einem gegenüber dem Gehäuseteil (12) drehbaren, lenkradseitigen Rotor (14) und mit einer Verbindungsvorrichtung (20) nach einem der vorhergehenden Ansprüche zur Übertragung von elektrischem Strom, insbesondere für eine Lenkradheizung, zwischen dem Gehäuseteil (12) und dem Rotor (14).

8. Lenkstock-Lenkrad-Übertragungseinheit (10) nach Anspruch 7, **dadurch gekennzeichnet, dass** der Rotor (14) eine taschenartige Aufnahme (48) für den Zentralsteckverbinder (32) aufweist.

9. Lenkstock-Lenkrad-Übertragungseinheit (10) nach Anspruch 8, **dadurch gekennzeichnet, dass** die Aufnahme (48) im wesentlichen tangential zur Rotorachse im Rotor (14) angeordnet ist.

10. Lenkstock-Lenkrad-Übertragungseinheit (10) nach Anspruch 8 oder 9, **dadurch gekennzeichnet, dass** die Aufnahme (48) in axialer Richtung bezüglich der Rotorachse auf wenigstens einer Seite zum Einführen des Zentralsteckverbinders (32) offen ist.

11. Lenkstock-Lenkrad-Übertragungseinheit (10) nach Anspruch 8, 9 oder 10, **dadurch gekennzeichnet, dass** die Aufnahme (48) in tangentialer Richtung bezüglich der Rotorachse auf wenigstens einer Seite zum Durchführen der beiden zwischen dem Zentralsteckverbinder und den beiden Endsteckverbindern (28, 30) verlaufenden Flachbandkabelabschnitten (24, 26) offen ist.

12. Lenkstock-Lenkrad-Übertragungseinheit (10) nach Anspruch 8 bis 11, **dadurch gekennzeichnet, dass** der Rotor (14) ein Rotorgrundteil (46) und ein Rotorabdeckteil umfasst, wobei die Aufnahme (48) im Rotorgrundteil angeordnet ist.

## Claims

1. Connection apparatus (20) for transmitting electric current for a steering wheel heater of a vehicle between a stationary housing part (12) and a rotor (14) which can rotate relative to the housing part (12), comprising a ribbon cable (22) and end plug-type connectors (28, 30) which are provided in the region of the free ends of the ribbon cable (22), **characterized in that** the ribbon cable (22) has a central plug-type connector (32) which is placed between the end plug-type connectors (28, 30) and is intended to be arranged on the rotor or housing and from which in each case at least one line runs to one end plug-type connector (28) and to the other end plug-type connector (30), with the two end plug-type connectors (28, 30) being intended to be arranged on the housing or rotor.

2. Connection apparatus (20) according to Claim 1, **characterized in that** the central plug-type connector (32) extends by an amount x in the longitudinal direction of the ribbon cable (22), and **in that** the distance a from the central plug-type connector (32) to one end plug-type connector (28) substantially corresponds to the distance b from the central plug-type connector (32) to the other end plug-type connector (30) plus the amount x.

3. Connection apparatus (20) according to Claim 1 or 2, **characterized in that** the two end plug-type connectors (28, 30) can be fastened to one another, in particular can be latched to one another.

4. Connection apparatus (20) according to Claim 1, 2 or 3, **characterized in that** two contact points (16, 18) are provided on the central plug-type connector (32), with each of the contact points (16, 18) being electrically connected to at least one line (34, 38) which extends in the longitudinal direction of the ribbon cable, and with at least one contact point (36, 40) being provided on the two end plug-type connectors (28, 30) for each line (34, 38).

5. Connection apparatus (20) according to Claim 4, **characterized in that** the contact points (16, 18) on the central plug-type connector are in the form of plug litz wires which extend transverse to the longitudinal direction of the ribbon cable (22).

6. Connection apparatus (20) according to Claim 4 or 5, **characterized in that** the contact points (36, 40) on the end plug-type connectors are in the form of plug litz wires which extend in the longitudinal direction of the ribbon cable.

7. Steering column-steering wheel transmission unit (10) having a stationary housing part (12) on the steering column and a rotor (14) which is on the steering wheel and can rotate relative to the housing part (12), and having a connection apparatus (20) according to one of the preceding claims for transmitting electric current, in particular for a steering wheel heater, between the housing part (12) and the rotor (14).

8. Steering column-steering wheel transmission unit (10) according to Claim 7, **characterized in that** the rotor (14) has a pocket-like receptacle (48) for the central plug-type connector (32).

9. Steering column-steering wheel transmission unit (10) according to Claim 8, **characterized in that** the receptacle (48) is arranged in the rotor (14) substantially tangential to the rotor axis.

10. Steering column-steering wheel transmission unit (10) according to Claim 8 or 9, **characterized in that** the receptacle (48) is open in the axial direction in relation to the rotor axis on at least one side for the purpose of inserting the central plug-type connector (32).

11. Steering column-steering wheel transmission unit (10) according to Claim 8, 9 or 10, **characterized in that** the receptacle (48) is open in the tangential direction in relation to the rotor axis on at least one side for the purpose of conducting the two ribbon cable sections (24, 26) which run between the central plug-type connector and the two end plug-type connectors (28, 30).

12. Steering column-steering wheel transmission unit (10) according to Claims 8 to 11, **characterized in that** the rotor (14) comprises a rotor base part (46) and a rotor cover part, with the receptacle (48) being arranged in the rotor base part.

## Revendications

1. Dispositif de liaison (20) pour la transmission d'un courant électrique pour un chauffage de volant d'un véhicule, entre une partie de boîtier fixe (12) et un rotor (14) qui peut tourner par rapport à la partie de boîtier (12), comprenant un câble en nappe (22) et des connecteurs d'extrémité (28, 30) prévus dans la zone des extrémités libres du câble en nappe (22), **caractérisé en ce que** le câble en nappe (22) présente un connecteur central (32) placé entre les connecteurs d'extrémité (28, 30) et prévu pour une disposition du côté du rotor ou du côté du boîtier, depuis lequel au moins une ligne s'étend à chaque fois vers l'un des connecteurs d'extrémité (28) et vers l'autre connecteur d'extrémité (30), les deux connecteurs d'extrémité (28, 30) étant prévus pour une disposition du côté du rotor ou du côté du boîtier.

2. Dispositif de liaison (20) selon la revendication 1, **caractérisé en ce que** le connecteur central (32) s'étend sur une dimension x dans le sens longitudinal du câble en nappe (22) et que l'écart a entre le connecteur central (32) et l'un des connecteurs d'extrémité (28) correspond pour l'essentiel à l'écart b entre le connecteur central (32) et l'autre connecteur d'extrémité (30) plus la dimension x.

3. Dispositif de liaison (20) selon la revendication 1 ou 2, **caractérisé en ce que** les deux connecteurs d'extrémité (28, 30) peuvent être fixés l'un à l'autre, notamment enclenchés l'un avec l'autre.

4. Dispositif de liaison (20) selon la revendication 1, 2 ou 3, **caractérisé en ce que** deux points de contact (16, 18) sont prévus sur le connecteur central (32), chacun des points de contact (16, 18) étant relié électriquement avec au moins une ligne (34, 38) qui s'étend dans le sens longitudinal du câble en nappe et au moins un point de contact (36, 40) étant prévu sur les deux connecteurs d'extrémité (28, 30) pour chaque ligne (34, 38).

5. Dispositif de liaison (20) selon la revendication 4, **caractérisé en ce que** les points de contact (16, 18) du côté du connecteur central sont réalisés sous la forme de lamelles enfichables qui s'étendent transversalement par rapport au sens longitudinal du câble en nappe (22).

6. Dispositif de liaison (20) selon la revendication 4 ou 5, **caractérisé en ce que** les points de contact (36, 40) du côté des connecteurs d'extrémité sont réalisés sous la forme de lamelles enfichables qui s'étendent dans le sens longitudinal du câble en nappe.

7. Unité de transmission colonne de direction/volant (10) comprenant une partie de boîtier (12) fixe côté colonne de direction et un rotor (14) côté volant, qui peut tourner par rapport à la partie de boîtier (12) et comprenant un dispositif de liaison (20) selon l'une des revendications précédentes pour la transmission d'un courant électrique, notamment pour un chauffage de volant, entre la partie de boîtier (12) et le rotor (14).

8. Unité de transmission colonne de direction/volant (10) selon la revendication 7, **caractérisée en ce que** le rotor (14) présente un logement en forme de poche (48) pour le connecteur central (32).

9. Unité de transmission colonne de direction/volant (10) selon la revendication 8, **caractérisée en ce que** le logement (48) est disposé dans le rotor (14) pour l'essentiel de manière tangentielle par rapport à l'axe du rotor.

10. Unité de transmission colonne de direction/volant (10) selon la revendication 8 ou 9, **caractérisée en ce que** le logement (48) est ouvert dans le sens axial par rapport à l'axe du rotor sur au moins un côté pour introduire le connecteur central (32).

11. Unité de transmission colonne de direction/volant (10) selon la revendication 8, 9 ou 10, **caractérisée en ce que** le logement (48) est ouvert dans le sens tangentiel par rapport à l'axe du rotor sur au moins un côté pour faire passer les deux sections de câble en nappe (24, 26) qui s'étendent entre le connecteur central et les deux connecteurs d'extrémité (28, 30).

12. Unité de transmission colonne de direction/volant (10) selon les revendications 8 à 11, **caractérisée en ce que** le rotor (14) comprend une partie de base de rotor (46) et une partie de recouvrement de rotor, le logement (48) étant disposé dans la partie de base de rotor.
